**Europäisches Patentamt**

**European Patent Office**

**Office européen des brevets**

(19)

(11) Publication number: **0 097 288**
**B1**

(12) # EUROPEAN PATENT SPECIFICATION

(45) Date of publication of patent specification: **13.05.87**

(51) Int. Cl.⁴: **A 61 C 17/00, A 61 C 3/02**

(21) Application number: **83105656.9**

(22) Date of filing: **09.06.83**

(54) **A dental prophylactic apparatus.**

(30) Priority: **22.06.82 FR 8210920**
**27.04.83 US 489122**

(43) Date of publication of application:
**04.01.84 Bulletin 84/01**

(45) Publication of the grant of the patent:
**13.05.87 Bulletin 87/20**

(84) Designated Contracting States:
**AT BE CH DE FR GB IT LI LU NL SE**

(56) References cited:
**EP-A-0 040 181**
**FR-A- 599 496**
**FR-A-2 267 743**
**FR-A-2 433 335**
**US-A-3 718 973**
**US-A-3 987 550**

(73) Proprietor: **Mabille, Pierre**
**G.-H. Piguet 1**
**CH-1347 Le Sentier (CH)**

(72) Inventor: **Mabille, Pierre**
**G.-H. Piguet 1**
**CH-1347 Le Sentier (CH)**

(74) Representative: **Gauger, Hans-Peter, Dipl.-Ing.**
**Patentanwälte Dipl.-Ing.Hans-Jürgen Müller**
**Dipl.-Chem.Dr.Gerhard Schupfner Dipl.-**
**Ing.Hans-Peter Gauger Lucile-Grahn-Strasse 38**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is directed to a prophylactic apparatus for cleaning teeth of the kind as referred in the preamble of claim 1.

A prophylactic apparatus of this kind is shown and described in FR—A—2 433 335. With this known apparatus a controlled supply of a powder laden air flow to a first nozzle opening of a dental handpiece is provided by a normally closed first solenoid shut-off valve that is connected through a pressure regulating means and through two branch lines of a first portion of an air line to the chamber of a mixing device. Each branch line is provided downstream of a common pressure regulating means with an adjustable valve means and a check valve. The mixing device comprises a first tube connected to the one branch line and centrally arranged in its chamber. The lower end of this first tube comprises an inlet nozzle means which is positioned below the level of the powder particles in the chamber and slightly above its bowl-shaped bottom. A second tube axially arranged inside of this first tube projects with a discharge opening of its inner end over the inlet nozzle means of the first tube. The outer end of this second tube projects over the chamber of the mixing device for being connected to the second branch line that extends through this interconnection point to the second portion of the air line. A pinch valve of this second portion of the air line is normally closed and connected through its interconnected branch line directly to the first portion of the air line. The interconnected branch line is provided with a separate pressure regulating means downstream of which it further is connected through another air line to a normally closed solenoid bleed valve. The chamber of the mixing device is also connected to this bleed valve through an interconnecting line for being vented to the atmosphere when the pinch valve is activated by a coordinated solenoid for its pinching of the second portion of the air line. This second portion of the air line is connected to a direct air supply line at a position downstream of the pinch valve which line is branched-off from the first portion of the air line at a position upstream of its pressure regulating means and downstream of the branching point of the branch line extending to the bleed valve and to the pinch valve. This air supply line is provided with still another flow control valve for allowing a predetermined minimum air flow to the first nozzle opening of the dental handpiece when the pinch valve is closed and the chamber of the mixing device is vented to the atmosphere through the opened bleed valve to thereby prevent a clogging of the first nozzle opening. Such a clogging of the first nozzle opening could occur when tooth cleaning powder particles are used that are at least partwise soluble in water.

This known prophylactic apparatus is accordingly provided with relatively sophisticated control and supply means for the powder laden air flow for securing that during its use a proper amount of the powder particles is mixed in the chamber of the mixing device with the incoming pressurized air and that a clogging of the two nozzle openings of the dental handpiece which could occur due to their interrelated venturi-like working principle is positively prevented when a tooth cleaning treatment is interrupted or finished.

With this in mind the present invention is directed to the object of providing a dental prophylactic apparatus of the kind referred which with a less costly arrangement of individual control and supply means for the powder laden air flow secures a respectively superior possibility of providing an optimum mixing of the pressurized air always with an almost constant amount of the powder particles and of also more positively preventing any clogging danger for the two nozzle openings of the dental handpiece.

This object is being solved by the features defined in the appended claim 1.

The inventive dental prophylactic apparatus thus only needs two valve members having preferably the design of ordinary three-way solenoid switch valves and a pinch valve. In an embodiment of the invention, an inlet port of each respective valve body of such valves is connected with the source of pressurized air and with a single branch line of the first portion of the air line, respectively, for being switched in a first control position as obtained with a respective valve member of each valve to the inlet nozzle means of the mixing device and to the pinch valve, respectively, as connected to an outlet port of either valve body. In the second control position of the valve members these outlet ports are switched to a respective venting port of each valve body for then venting to the atmosphere the first portion of the air line and the portion of the branch line extending to the pinch valve, respectively, with the inlet port of the valve body then being blocked by the valve member. By venting the first portion of the air line through such a venting port this will automatically also cause a venting of the chamber of the mixing device whose initially higher pressure will then concurrently be lowered towards the second portion of the air line that reaches to the first nozzle opening of the dental handpiece to thereby prevent any clogging of the same as soon as the tooth cleaning is interrupted or finished. When the first portion of the air line is connected to the source of pressurized air the disposition of the inlet nozzle means and the discharge opening ensures on the other side an intensive and always almost constant mixing of the powder particles with the incoming pressurized air independent of the air pressure which may be regulated by means of any suitable pressure regulator as arranged in the first portion of the air line downstream of the branching point for the air line that extends to the pinch valve.

An example of the invention will now be described with reference to the accompanying drawings in which:

Figure 1 is a perspective view with portions removed of the apparatus in accordance with the present invention;

Figure 2 is a general pneumatic plan for the apparatus of Figure 1;

Figure 3 is a cross-sectional view of the mixing device taken on the lines III—III of Figure 2;

Figure 4 is a cross-sectional view of a pinch valve taken on the lines IV—IV of Figure 5;

Figure 5 is a cross-sectional view taken on the lines V—V of Figure 4; and

Figure 6 is an enlarged exploded view of an end of the handpiece of the apparatus of Figure 1.

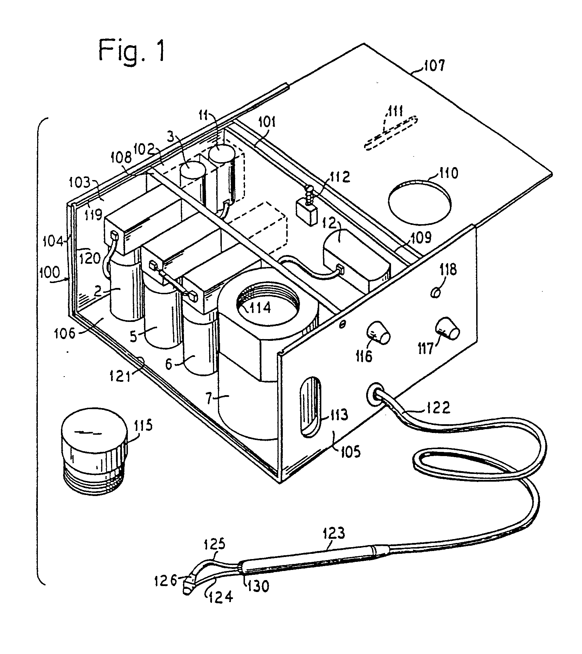

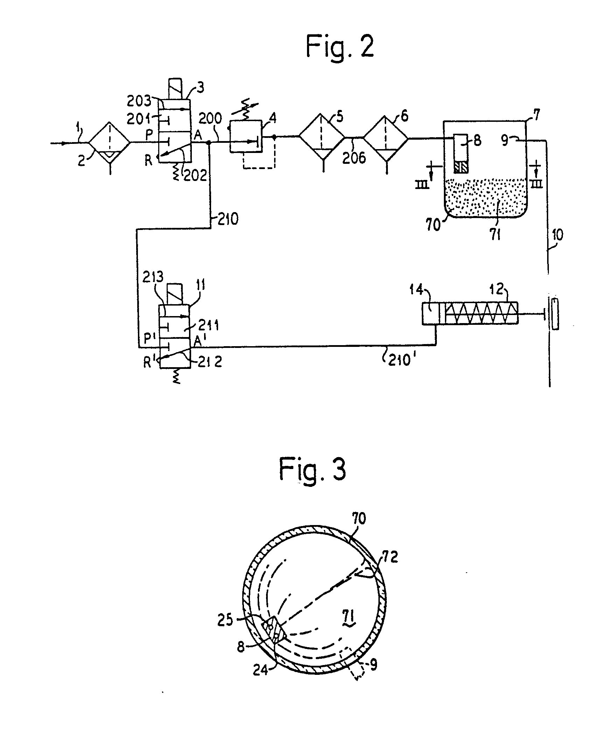

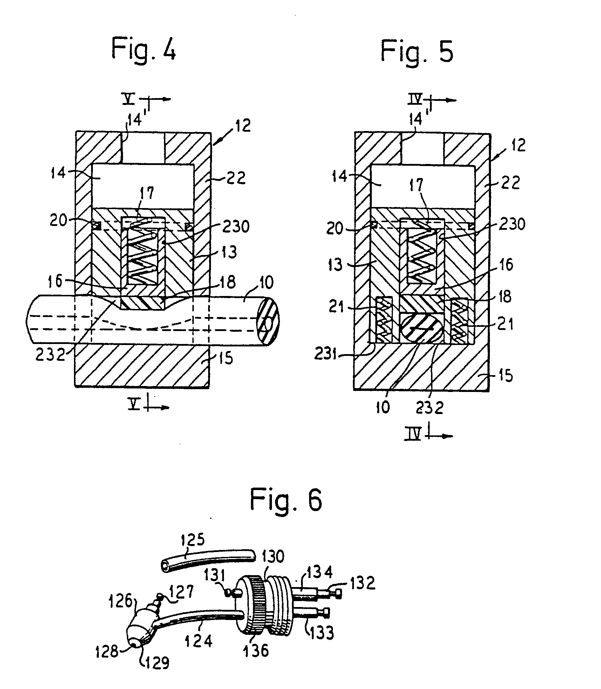

The principles of the present invention are particularly useful in a prophylactic apparatus generally indicated at 100 in Figure 1. The apparatus 100 has a first or main air filter 2, a first control means 3, an air pressure regulator 4 (see Figure 2), two additional air filters 5 and 6, a mixing device 7 and second control means 11 which controls a pinch valve 12. In addition, the apparatus 100 has a handpiece 123 which terminates in a nozzle head 126 which, as best illustrated in Figure 6, has a first nozzle opening 128 and a second nozzle opening 129.

As best illustrated in the pneumatic plan of Figure 2, pressurized air from a source at an air pressure of 3 to 10 kg/cm$^3$ is provided through an air line 1 formed by a hose. This air passes through the air filter 2 which has an outlet connected to a housing of the first control means 3. As illustrated, the first control means is a solenoid valve which has an incoming or first port P connected to the source of air, an outlet or second port A, which is connected to a first portion 200 of the air line 1, and also an outlet or third port R, which is connected to the atmosphere. A valve member 201 has an arrangement with a passage 202 and a passage 203. In the illustrated position which is a de-energized or second control position, the valve member 201 has the passage 202 connecting the second port A to the third port R. The first port P then is blocked. In the other or first control position which is obtained when the valve is actuated by closing the main circuit or switch of the apparatus, the passage 203 will connect the first port P to the second port A so that the first portion 200 of the air line 1 is charged with air from the air line 1 connected to the air source.

The first portion 200 of the air line 1 extends through the pressure regulator 4 and through the two air filters 5 and 6 which are arranged in series in a section 206 that terminates in an inlet nozzle means 8 of the mixing device 7. As illustrated, the mixing device 7 has a chamber 70 which receives powder particles 71. The inlet nozzle means 8, which will be discussed in greater detail, is positioned to project the air downward on the powder particles 71 to cause a fluidizing and mixing of the particles with the air which is then removed through a discharge opening 9 which is connected to a second portion of the air line 1 as also provided by a hose.

As illustrated, the second portion 10 of the air line 1 passes through the pinch valve 12 which is controlled by the second control means 11 which will be discussed in greater detail. The second control means 11 controls the flow of pressurized air in a branch line 210 of the first portion 200, 206 of the air line and has a portion 210' that extends to a housing chamber 14 of the pinch valve 12.

As illustrated, the second control means 11 is a solenoid valve similar to the first control means 3 and has a valve member 211 having passages 212 and 213 and a housing with a first port P', a second port A' and a third port R'. When the valve member 211 is in the illustrated de-energized or second control position, the passage 212 connects the second port A' to the third port R' to vent the housing chamber 14, and when the valve member 211 is in the energized or first control position, the passage 213 connects ports P' and A' together. When in the energized position with the passage 213 connecting the port P' and A', air under pressure passes through the branch line 210 into portion 210' to the housing chamber 14 it acts on a first piston 13 to cause the pinch valve 12 to pinch the hose 10 to thereby prevent the passage of air laden with entrained particles of the powder to the handpiece 123. The solenoid valve 11 is controlled by a switch such as a foot switch (not illustrated) which opens the circuit to cause the valve member 211 to move to the illustrated second control position. When the switch is opened, the valve will move to the first control position with the passage 212 connecting the housing chamber 14 to the atmosphere through the exhaust or third port R'.

This results in a release of the pinching of the hose 10 so that the flow of pressurized air through the nozzle 8 will cause a fluidization of the powder which powder will mix with the other air and be discharged through the discharge opening 9 into the hose 10 for discharge through the first nozzle opening 128 in Figure 6. When the pinch valve 12 releases the hose 10 as mentioned hereinabove, a drainage of the air under pressure in the chamber 70 will occur. The air that flows out of the discharge opening 9 allows the discharge through the inlet nozzle means 8 to cause a fluidizing and therefore produce a flow of air and particles of powder. When the solenoid valve 11 is actuated to shift its valve member 211 to the position connecting the port P' to the port A' to allow applying air under pressure to the housing chamber 14, the hose 10 is then compressed to prevent passage of air and any powder. With the prevention of passage of any air and powder past the pinch valve 12, flow through the chamber 70 is stopped.

On general stoppage of the apparatus by opening a main switch, the solenoid valve 3 will be shifted to the illustrated second control position so that all of the air under pressure in the first portion 200, 206 of the air line 1 and in the chamber 70 of the mixing device 7 will be exhausted through the port R. This reverse flow back through the inlet nozzle means 8 and the air filters 6 and 5 as well as the pressure regulator 4 will function to unclog the filters 6 and 5 due to a backwash effect. In addition, the release of the pressure in the housing chamber 14 causes an opening of the pinch valve 12 to allow a back flow through the first nozzle opening 128 which will remove any particles and prevent clogging therein. It should be noted that the removal of the air pressure in the chamber 70 of the mixing device 7 will not cause any fluidizing of the powder therein. Also, if the pinch valve 12 had pinched the hose 10 for a short time before de-energizing the system, the majority of the powder entrained in the air of chamber 70 would have settled out. It also can be arranged that the valve member 211 of the second solenoid valve 11 will also move to the illustrated second control position which has port A' connected to the exhaust port R' when the main switch of the apparatus is opened.

The circuit of Figure 2 in spite of its very great simplicity, permits a fluidizing of the powder in the mixing device. It also insures a declogging of the filters and a purge of the hose 10 during a shutdown of the system.

As illustrated in Figure 3, the inlet nozzle means 8 is a double jet nozzle which preferably has either two parallel jet-passages 24 and 25 or two jet-passages which are either slightly convergent or divergent. The two jet-passages 24 and 25 are directed towards the base of the chamber 70 with the jets being positioned above the powder level. This permits a simple and effective fluidization of the powder in the chamber 70 by the compressed air jets. The system with the two parallel jets of air also permits a homogeneous mixing of the entire volume of the chamber 70 and thus creates a gyrating turbulence permitting both an energetic mixing of the powder when the first control means 3 is activated by having a voltage placed on the solenoid by closing the main switch and the hose 10 is opened. When the hose 10 is not pinched by the pinch valve 12, a constant vaporization of the powder, regardless of the quantity of the powder, will be created by the jets of the inlet nozzle means 8 which create a vertical and vortex turbulence. As best illustrated in Figure 3, the two jet-passageways 24 and 25 of the inlet nozzle means 8 are provided in a solid member and are disposed in the proximity of the lateral wall of the chamber 70 and in an eccentric fashion relative to its axis. As mentioned hereinabove, the inlet nozzle means 8 is situated above the level of the powder 71 and brings about a mixing of the powder which mixes efficiently with the compressed air before escaping through the discharge opening 9, which is advantageously disposed in the upper part of the chamber 70 and is displaced by approximately 90° as illustrated in broken lines in Figure 3 from the inlet nozzle means 8.

During the entire operation of the mixing device 7, nearly the same dispersion of the powder per unit of volume air will exist whether the chamber 70 is charged with a high or low level of powder which level remains, however, always lower than the lower edge of the inlet nozzle means 8 or whether the chamber 70 is almost empty. One thus avoids too strong a concentration of powder at the starting of the apparatus. The fact that the inlet nozzle means 8 comprises the two jet-passages 24 and 25 disposed non-axially relative to the chamber 70 contributes to the creation of two divergent fluxes of mixing directed towards the base of the chamber 70 and preferably rounded in order that a total fluidization is realized. A zone 72 of the base of the chamber 70 which is poorly swept by the eddies is virtually negligible. In addition, the position of the discharge opening 9 is removed from the point of this zone as illustrated in broken lines.

When the solenoid valve 11 is activated to apply pressure to the housing chamber 14 of the pinch valve 12, the pinch valve will cause a pinching of the hose 10 which is, for example, composed of a silicone rubber. The pinch valve 12 in combination with the solenoid valve 11 and the other elements of the pneumatic circuit will enable an automatic purge of the entire system when there is complete stoppage of the apparatus as mentioned hereinabove by the opening of the main switch.

To insure a selective pinching of the hose 10, the pinch valve 12 preferably has the structure illustrated in Figures 4 and 5. As illustrated, the pinch valve 12 has a cylindrical housing 22 with a base 15 at one end of its cylindrical chamber 14 that receives the first piston 13. To provide a seal between the walls of the chamber 14 and the first piston 13, a toric seal 20 such as an O-ring is provided. The housing chamber 14 has an outlet 14' which is coupled to the branch line 210, 210' to supply air under pressure to the housing chamber 14. The hose 10 extends through an opening in the housing 22, adjacent the base 15 forming an abutment for the first piston 13. If the first piston 13 were solely utilized to pinch the hose 10, there would be the problem that an excessive pressure in the housing chamber 14 would lead to applying too much pressure on the hose 10 to cause deterioration thereof. Another problem would be that the pressure in the housing chamber 14 might be insufficient to obtain a complete compression of the hose 10.

In the preferred embodiment of the pinch valve 12, the first piston 13 is provided with an axial bore 230 which receives a second piston 16 which is urged towards the base 15 by a spring 17. The piston 13 adjacent the end that engages the base 15 has spring seats for receiving first springs 21 which urge the first piston 13 away from the base 15. In addition, the first piston 13 has a transversely extending passage 232 (Figure 5) which allows passage of the hose 10 on the base 15 with engagement by the piston 13. As illustrated, the first springs 21 are selected so that the first piston 13 will move into contact with the surface of the base 15 with a very small fluid pressure being applied in the chamber 14. The actual pinching of the hose 10 occurs due to the second piston 16 being urged by the spring 17 against the hose 10. Preferably, an elastic buffer or pad 18 is provided on the end of the second piston 16 to engage the hose 10.

With the construction illustrated in Figures 4 and 5, any pressure applied in the housing chamber 14 will urge the first piston 13 to engagement with the base 15. The spring 17, which acts between the first piston 13 and the second piston 16, creates the pressure to insure the pinching of the hose 10. The force of the spring 17 is the only force that must be taken into account for creating the pressure necessary and sufficient for the pinching of the hose 10, which therefore is no longer dependent upon variations in the pressure of the air applied to the chamber 14.

The apparatus 100 as illustrated in Figure 1 is disposed in a compact fashion in a case which has a base 106, a front wall 105 and a parallel back wall 104. The back wall 104 as well as the front wall 105 are each provided with guide grooves such as the guide groove 119 of the back wall 104 for guiding and receiving a removable cover 107. In addition, a removable side wall is receivable in grooves such as 120 in the back wall 104 and grooves 121 in the base 106. Inside the case, partitions 108 and 109 create compartments 101, 102 and 103. The cover 107 has a groove 111 that cooperates with a stop finger 112 mounted on the central partition 109 in order to limit and lock the movement of the cover 107. Each compartment contains a part of the elements of the pneumatic circuit of Figure 2, which elements include a water feeding circuit having a filter, a pressure regulator, a solenoid control valve, a water heater and an electrical feeding element of the apparatus. The front wall 105 is illustrated as having controls 116, 117 and 118 and also a connection for receiving a hose or double conduit 122 of the handpiece 123.

As illustrated in Figure 1, the mixing device 7 as well as the filters 2, 5 and 6 are all disposed in compartment 103 which is readily accessible because it is limited by a removable side wall which is capable of being readily removed by opening the cover 107. The filters 2, 5 and 6 and the chamber 70 of the mixing device 7 are preferably mounted on a partition 108 which can be pivoted approximately 90° about its axis in order to bring the elements into a horizontal position which permits a convenient exchange of these elements. The mixing device 7 has an opening 114 in its upper surface. The cover 107 has an opening 110 which is aligned with the opening 114 so that access to the interior of the chamber 70 can be obtained even with the cover 107 closed. In order to close the opening 114, a transparent cap 115 which is, for example, formed of an acrylic glass or "plexiglass" (Registered Trademark), can be inserted through the opening 110 and screwed into the opening 114 to close the chamber 70 of the mixing device 7. The front wall 105 is illustrated as provided with a cutout portion 113 which enables checking the level of the chamber 70 of the mixing device 7. Thus, the operator can verify that at the time of filling the powder 71 does not extend to the level of the lower edge of the inlet nozzle means 8.

As can be seen in Figure 1 as well as in Figure 6, the handpiece 123 comprises a member in the form of a sleeve surrounding the double conduit 122 which has a first passage connected to the hose 10 as well as a second passage connected to a water supply line. The nozzle openings 128 and 129 are formed in a nozzle head 126 which is secured by a rigid conduit 124 to a connector 130 with threads and knurling 136. The connector 130 which is threaded into the sleeve of the handpiece 123 has two rigid conduits 132 and 133 which are of unequal length and are adapted to receive the double conduit 122. The rigid conduit 132 has a shoulder 134 and terminates in a nipple 131. The conduit 133 is in communication with the rigid conduit 124 and is preferably designed for conveying water to the second nozzle opening 129 which is concentrically arranged to the central first nozzle opening 128. It should be noted that the purpose of having different lengths for the conduits 132 and 133 is to prevent interchanging of the connection of the air and water conduits. The centrally disposed first position opening 128 is in communication with a nipple 127 which is connected by a flexible tube 125 to the nipple 131. Thus, air charged with the powder is ejected through the central opening 128 of the nozzle head 126 to form the jet of air laden with powder particles while water passes through the rigid conduit 124 to a chamber which is in communication with the second nozzle opening 129 to form an annular curtain of water surrounding the centrally disposed jet of air laden with powder particles.

## Claims

1. A prophylactic apparatus (100) for cleaning teeth with a flow of air containing tooth cleaning powder particles (71) and with a flow of water by means of a dental handpiece (123) having a first and a second nozzle opening (128, 129) and a water line with a valve means extending from a source of water and being connected to the second nozzle opening (129), said apparatus comprising an air line (1) a first portion (200, 206) of which contains at least one air filter (2, 5, 6) and extends from a source of pressurized air to an inlet nozzle means (8) of a mixing device (7) having a chamber (70) filled with the powder particles (71), a second portion (10) of said air line (1) extending from a discharge opening (9) of said mixing device (7) to said first nozzle opening (128) of the dental handpiece (123), said first portion (200, 206) and said second portion (10) of the air line (1) being each provided with respective first and second control means (3, 11, 12) which are each preferably activated by a solenoid for controlling the air flow to said mixing device (7) and the powder laden air flow to said first nozzle opening (128) respectively, said second control means (11) comprising a pinch valve (12) that is provided for said second portion (10) of the air line (1) and is connected through a branch line (210, 210') to said first portion (200, 206) of the air line (1), characterized in that the inlet nozzle means (8) and the discharge opening (9) are both disposed in said chamber (70) above the level of the powder particles (71) to be fluidized and in that the first and the second control means (3, 11) comprise respective first and second valve members (201, 211) which in a first control position (203, 213) directly connect the source of pressurized air through said first portion (200, 206) of the air line (1) to the inlet nozzle means (8) of the mixing device (7) and through said branch line (210, 210') to the pinch valve (12) for pinching said second portion (10) of the air line (1), respectively, and which in a second control position (200, 212) directly vent to the atmosphere said first portion (200, 206) of the air line (1) and said branch line (210, 210') with its portion (210') extending to the pinch valve (12), respectively.

2. A prophylactic apparatus according to claim 1, characterized in that the inlet nozzle means (8) comprises two vertically directed jet-passage-ways (24, 25) to create two jets of air for fluidizing the powder particles (71) in a direction towards said discharge opening (9).

3. A prophylactic apparatus according to claim 2, characterized in that the two jet-passage-ways (24, 25) of the inlet nozzle means (8) are disposed approximately at a lateral wall of the chamber (70) of the mixing device (7) and eccentric relative to the axis thereof at a position spaced from the discharge opening (9).

4. A prophylactic apparatus according to any of the claims 1 to 3, characterized in that the second control means (11) is connected through said portion (210') of the branch line (210, 210') extending to the pinch valve (12) to a cylindrical housing chamber (14) of the pinch valve (12) in which a first piston (13) is arranged which in the first control position (213) of the valve member (211) of said second control means (11) is moved against the biasing force of a first resetting spring means (21) for pinching the second portion (10) of the air line (1).

5. A prophylactic apparatus according to claim 4, characterized in that said first piston (13) of the pinch valve (12) is provided with an axial bore (230) for slidably receiving a second piston (16) that is biased away from the first piston (13) by means of a second resetting spring means (17) for pinching the second portion (10) of the air line (1) when the first piston (13) has engaged an abutment (15) of the housing chamber (14) under a predetermined low air pressure.

6. A prophylactic apparatus according to any of the claims 1 to 5, in which the air line (1) is provided with a main air filter (2) and a pressure regulator (4) upstream and downstream, respectively, of said first control means (3), characterized in that the pressure regulator (4) is arranged in said first portion (200, 206) of the air line (1) at a position downstream of the branching point of said branch line (210, 210') and upstream of at least one further air filter (5, 6).

**Patentansprüche**

1. Prophylaxe-Gerät (100) zum Reinigen von Zähnen mittels eines Pulverteilchen (71) eines Zahnreinigungsmittels enthaltenden Luftstromes und eines Wasserstromes unter Verwendung eines Dentalhandstückes (123), das eine erste und eine zweite Düsenöffnung (128, 129) aufweist sowie eine mit einer Ventileinrichtung versehene Wasserleitung, die sich von einem Wasseranschluß hin zu der zweiten Düsenöffnung (129) erstreckt, wobei das Gerät mit einer Luftleitung (1) versehen ist, die in einem ersten Abschnitt (200, 206) wenigstens einen Luftfilter (2, 5, 6) enthält und sich von einem Druckluftanschluß hin zu einem eine Einlaßdüse bildenden Organ (8) eines Mischgerätes (7) erstreckt, das eine mit den Pulverteilchen (71) gefüllte Kammer (70) aufweist, und die sich mit einem zweiten Abschnitt (10) der Luftleitung (1) von einer Auslaßöffnung (9) des Mischgerätes (7) hin zu der ersten Düsenöffnung (128) des Dentalhandstückes (123) erstreckt, wobei der erste Abschnitt (200, 206) und der zweite Abschnitt (10) der Luftleitung (1) mit einem ersten und einem zweiten Steuerorgan (3, 11, 12) versehen sind, die zur Steuerung des Luftstromes hin zu dem Mischgerät (7) und des mit Pulver beladenen Luftstromes hin zu der ersten Düsenöffnung (128) vorzugsweise jeweils durch ein Solenoid betätigt werden, und wobei das zweite Steuerorgan (11) ein Quetschventil (12) umfaßt, das für den zweiten Abschnitt (10) der Luftleitung (1) vorgesehen und über eine Zweigleitung (210, 210') an den ersten Abschnitt (220, 206) der Luftleitung (1) angeschlossen ist, dadurch gekennzeichnet, daß das die Einlaßdüse bildende Organ (8) und die Auslaßöffnung (9) in der Kammer (70) beide oberhalb des Niveaus der zu fluidisierenden Pulverteilchen (71) angeordnet sind, und daß das erste und das zweite Steuerorgan (3, 11) erste und zweite Ventilkörper (201, 211) umfassen, die in einer ersten Steuerposition (203, 213) den Druckluftanschluß über den ersten Abschnitt (200, 206) der Luftleitung (1) direkt an das eine Einlaßdüse bildende Organ (8) des Mischgerätes (7) und über die Zweigleitung (210, 210') an das Quetschventil (12) zum Abklemmen des zweiten Abschnittes (10) der Luftleitung (1) anschließen und die in einer zweiten Steuerposition (200, 212) den ersten Abschnitt (200, 206) der Luftleitung (1) und die Zweigleitung (210, 210') mit ihrem sich zu dem Quetschventil (12) hin erstreckenden Abschnitt (210') direkt zu der Atmosphäre belüften.

2. Prophylaxe-Gerät nach Anspruch 1, dadurch gekennzeichnet, daß das eine Einlaßdüse bildende Organ (8) zwei vertikal ausgerichtete Strahlen-Strömungswege (24, 25) umfaßt, um für ein Fluidisieren der Pulverteilchen (71) in Richtung auf die Auslaßöffnung (9) zwei Luftstrahlen zu erzeugen.

3. Prophylaxe-Gerät nach Anspruch 2, dadurch gekennzeichnet, daß die beiden Strahlen-Strömungswege (24, 25) des eine Einlaßdüse bildenden Organs (8) angenähert an einer Seitenwand der Kammer (70) des Mischgerätes (7) und außermittig in bezug auf deren Achse an einer von der Auslaßöffnung (9) beabstandeten Position angeordnet sind.

4. Prophylaxe-Gerät nach einem der Ansprüche 1 bis 3, dadurch gekennzeichnet, daß das zweite Steuerorgan (11) über den sich hin zu dem Quetschventil (12) erstreckenden Abschnitt (210') der Zweigleitung (210, 210') an eine zylindrische Gehäusekammer (14) des Quetschventils (12) angeschlossen ist, in welcher ein erster Kolben (13) angeordnet ist, der in der ersten Steuerposition (213) des Ventilkörpers (211) des zweiten Steuerorgans (11) entgegen der Vorspankraft eines ersten rückstellenden Federorgans (21) zum Abklemmen des zweiten Abschnittes (10) der Luftleitung (1) bewegt wird.

5. Prophylaxe-Gerät nach Anspruch 4, dadurch gekennzeichnet, daß der erste Kolben (13) des Quetschventils (12) mit einer Axialbohrung (230) für eine verschiebbare Aufnahme eines zweiten Kolbens (16) versehen ist, der mittels eines zweiten rückstellenden Federorgans (17) weg von dem ersten Kolben (13) vorgespannt ist für ein Abklemmen des zweiten Abschnittes (10) der Luftleitung (1), wenn der erste Kolben (13) unter einem vorbestimmten niedrigen Luftdruck an einem Widerlager (15) der Gehäusekammer (14) angeschlagen hat.

6. Prophylaxe-Gerät nach einem der Ansprüche 1 bis 5, bei dem die Luftleitung (1) mit einem Hauptluftfilter (2) und einem Druckregler (4) stromaufwärts und stromabwärts von dem ersten Steuerorgan (3) versehen ist, dadurch gekennzeichnet, daß der Druckregler (4) in dem ersten Abschnitt (200, 206) der Luftleitung (1) an einer Position stromabwärts von dem Verzweigungspunkt der Zweigleitung (210, 210') und stromaufwärts von wenigstens einem weiteren Luftfilter (5, 6) angeordnet ist.

**Revendications**

1. Appareil de prophylaxie (100) pour le nettoyage des dents à l'aide d'un courant d'air contenant des particules de poudre de nettoyage des dents (71) et d'un courant d'eau, projetés au moyen d'un instrument dentaire à main (123) qui comporte un premier et un second orifices d'éjection (128, 129) ainsi qu'un conduit à eau muni d'une valve et s'étendant à partir d'une source d'eau pour venir se raccorder au second orifice d'éjection (129), ledit appareil comprenant un conduit à air (1) dont un premier tronçon (200, 206) comprend au moins un filtre à air (2, 5, 6) et s'étend à partir d'une source d'air comprimé jusqu'à un organe formant une buse d'injection (8) d'un dispositif mélangeur (7) qui comprend une chambre (70) remplie des particules de poudre (71), un second tronçon (10) dudit conduit à air (1) s'étendant depuis une ouverture d'évacuation (9) dudit dispositif mélangeur (7) jusqu'audit premier orifice d'éjection (128) de l'instrument dentaire à main (123), ledit premier tronçon (200, 206) et ledit second tronçon (10) du conduit à air (1) étant respectivement pourvus d'un premier et d'un second moyens de commande (3, 11, 12) qui sont de préférence actionnés chacun par un solénoïde pour réguler respectivement l'écoulement du courant d'air en direction dudit dispositif mélangeur (7) et l'écoulement du courant d'air chargé de poudre en direction dudit premier orifice d'éjection (128), ledit second moyen de commande (11) comprenant une valve à pincement (12) qui agit sur ledit second tronçon (10) du conduit à air (1) et est reliée par un conduit de dérivation (210, 210') audit premier tronçon (200, 206) du conduit à air (1), caractérisé en ce que l'organe formant une buse d'injection (8) et l'ouverture d'évacuation (9) sont tous deux disposés dans ladite chambre (70) au-dessus de la surface libre de l'amas de particules de poudre (71) destinées à être fluidisées et en ce que le premier et le second moyens de commande (3, 11) comprennent des premier et second organes respectifs formant valves (201, 211) qui, dans une première position de commande (203, 213) agissent pour que la source d'air comprimé soit respectivement raccordée directement, d'une part, à travers ledit premier tronçon (200, 206) du conduit à air, à l'organe formant une buse d'injection (8) du dispositif mélangeur (7) et, d'autre part, à travers ledit conduit de dérivation (210, 210'), à la valve à pincement (12) pour qu'elle écrase ledit second tronçon (10) du conduit à air (1) et qui, dans une seconde position de commande (202, 212), mettent respectivement en communication directe avec l'atmosphère ledit premier tronçon (200, 206) du conduit à air (1) et ledit conduit de dérivation (210, 210') par son tronçon (210') qui se prolonge jusqu'à la valve à pincement (12).

2. Appareil de prophylaxie selon la revendication 1, caractérisé en ce que le moyen formant buse d'injection (8) comprend deux passages d'éjection (24, 25) orientés dans une direction verticale pour engendrer deux jets d'air destinés à fluidiser les particules de poudre (71) en direction de ladite ouverture d'évacuation (9).

3. Appareil de prophylaxie selon la revendication 2, caractérisé en ce que les deux passages d'éjection (24, 25) du moyen formant buse d'injection (8) sont situés sensiblement le long d'une paroi latérale de la chambre (70) du dispositif mélangeur (7) et sont excentrés par rapport à son axe dans une position espacée de l'ouverture d'évacuation (9).

4. Appareil de prophylaxie selon l'une quelconque des revendications 1 à 3, caractérisé en ce que le second moyen de commande (11) est, par l'intermédiaire dudit tronçon (210') du conduit de dérivation (210, 210') qui se prolonge jusqu'à la valve à pincement (12), raccordé à un logement cylindrique (14) qui est ménagé dans la valve à pincement (12) et dans lequel est disposé un premier piston (13) qui, dans la première position de commande (213) de l'organe formant valve (211) dudit second moyen de commande, est déplacé à l'encontre de la force de sollicitation d'un premier organe élastique de rappel (21) pour écraser le second tronçon (10) du conduit à air (1).

5. Appareil de prophylaxie selon la revendication 4, caractérisé en ce que ledit premier piston (13) de la valve à pincement (12) est pourvu d'un perçage axial (230) destiné à recevoir à coulissement un second piston (16) qui, sous l'action d'un second organe élastique de rappel (17), est sollicité dans une direction l'éloignant du premier piston (13), pour écraser le second tronçon (10) du conduit à air (1) lorsque le premier piston (13) est venu au contact d'une butée (15) du logement (14) sous une faible pression d'air prédéterminée.

6. Appareil de prophylaxie selon l'une des revendications 1 à 5, dans lequel le conduit à air (1) est pourvu d'un filtre à air principal (2) et d'un régulateur de pression (4), respectivement en amont et en aval des premiers moyens de commande (3), caractérisé en ce que le régulateur de pression (4) est monté dans ledit premier tronçon (200, 206) du conduit à air (1) dans une position située en aval du point de raccordement dudit conduit de dérivation (210, 210') et en amont d'au moins un autre filtre à air (5, 6).

## Fig. 1

# Fig. 2

# Fig. 3

## Fig. 4

## Fig. 5

## Fig. 6

3